**Europäisches Patentamt**

**European Patent Office**

**Office européen des brevets**

(19)

(11) Veröffentlichungsnummer : **0 379 722 B1**

(12) **EUROPÄISCHE PATENTSCHRIFT**

(45) Veröffentlichungstag der Patentschrift :
**20.05.92 Patentblatt 92/21**

(21) Anmeldenummer : **89123839.6**

(22) Anmeldetag : **22.12.89**

(51) Int. Cl.⁵ : **F16L 3/22,** H02G 3/26,
**B60R 11/00**

(54) **Aus Kunststoff bestehendes Halteelement.**

(30) Priorität : **27.01.89 DE 3902498**

(43) Veröffentlichungstag der Anmeldung :
**01.08.90 Patentblatt 90/31**

(45) Bekanntmachung des Hinweises auf die
Patenterteilung :
**20.05.92 Patentblatt 92/21**

(84) Benannte Vertragsstaaten :
**ES FR GB SE**

(56) Entgegenhaltungen :
**DE-A- 3 047 462**
**DE-A- 3 236 981**
**DE-A- 3 708 864**

(73) Patentinhaber : **TRW UNITED-CARR GMBH &**
**CO. KG**
**Am Pulverhäuschen 7**
**W-6753 Enkenbach-Alsenborn 1 (DE)**

(72) Erfinder : **Kraus, Willibald**
**Industriestrasse 6**
**W-6718 Grünstadt (DE)**
Erfinder : **Rückwardt, Hans-Werner**
**Beethovenstrasse 33**
**W-6719 Eisenberg (DE)**

(74) Vertreter : **Schieschke, Klaus, Dipl.-Ing. et al**
**Patentanwälte Dipl.-Ing. E. Eder Dipl.-Ing. K.**
**Schieschke Elisabethstrasse 34**
**W-8000 München 40 (DE)**

**Beschreibung**

Die Erfindung bezieht sich auf ein aus Kunststoff bestehendes Halteelement, mit einer an einem Träger zu befestigenden Außenschale aus härterem Material und einer darin eingesetzten Innenschale aus weicherem Material, welche mit zum Träger hin offenen Lagerstellen zur Aufnahme rohrförmiger Teile versehen ist, wobei die Außenschale einen dem Träger benachbarten offenen Bereich aufweist, in welchen die die Aüßenschale im unmontierten Zustand überragende Innenschale eingelagert ist.

Als Stand der Technik ist bereits ein Halteelement bekannt, das aus einer Innenschale aus weicherem Material und einer Außenschale aus härterem Material, beispielweise aus Metall, besteht (DE-A-30 47 462). Hierbei umfaßt die Außenschale die Innenschale nur über einen relativ geringen Bereich. Damit ergibt sich der Nachteil, daß beispielsweise bei Einsatz an einem Kraftfahrzeug unter Steinschlageinwirkung die Innenschale eine Beschädigung erfährt und damit die Rohrleitungen in den Lagerstellen nicht einwandfrei gehaltert sind. Ein weiterer Nachteil besteht darin, daß auch im montierten Zustand die Lagerstellen offene Bereiche aufweisen, so daß speziell unter dem Einfluß von Schwingungen die in den Lagerstellen gehalterten Rohre keine sichere Befestigung erfahren.

Zum Stand der Technik zählt weiterhin eine Vorrichtung zum Befestigen von Rohren, insbesondere in Kraftfahrzeugen, welche ebenfalls zweiteilig ausgebildet ist (DE-A-32 36 981). Hier sind die Lagerstellen auf der dem Träger abgewandten Seite offen und werden nur durch einen die weichere Innenschale umfassenden Sicherungsbügel gehalten, welcher seinerseits mit der weicheren Innenschale verclipst ist. Auch hier ist keine sichere Halterung der in den Lagerstellen eingelagerten Rohrleitungen gegeben, so daß sich diese in unerwünschter Weise unter mechanischen Einwirkungen aus ihren Lagerstellen lösen können.

Als Stand der Technik ist darüber hinaus ein Halteelement bekannt, welches insgesamt aus drei Teilen besteht: Einer härteren Außenschale, einer weicheren Innenschale sowie einem Abschlußdeckel, welcher nach Einsetzen der Innenschale in die Außenschale die gesamte Einheit abschließt (US-A-4 347 998). Diese bekannte Anordnung dient zur Aufnahme von elektrischen Rohrleitungen und ist, bedingt durch die Konstruktion, nicht geräuschdämpfend, so daß der Einsatzbereich eingeschränkt ist.

Zum Stand der Technik zählen darüber hinaus weitere Halteelemente, bei welchen jeweils um eine aus elastischem Material bestehende Innenschale von einer aus Blech bestehenden härteren Außenschale umfaßt wird, welche ihrerseits zur Befestigung an einem Träger dient (DE-A-21 62 662, DE-A-16 50 019). Weiterer bekannter Stand der Technik offenbart Konstruktionen, bei welchen ein aus Kunststoff bestehendes Teil zur Aufnahme von Rohrleitungen dient, das andererseits von einer Bleckabdeckung umschlossen wird (GB-A-1 403 714).

Darüber hinaus ist ein ebenfalls aus drei Teilen bestehender Rohrträger bekannt mit zwei, die Außenschale bildenden halbkreisförmigen Elementen und jeweils einem schmalen Ring als Innenschale (DE-A-28 14 718). Zum Stand der Technik zählt auch ein Isolier- und Halteelement für Leitungen (DE-A-1 108 526). Allen diesen Konstruktionen ist gemeinsam, daß sie so konzipiert sind, daß keinerlei Geräuschdapfung im Bereich ihrer Lagerung für rohrförmige Teile gegeben ist.

Demgegenüber besteht die Aufgabe der vorliegenden Erfindung darin, ein Halteelement der eingangs genannten Art zu schaffen, welches auch unter größerer mechanischer Einwirkung weitestgehend beschädigungsfrei ist und bei einfacher Montagemöglichkeit eine sehr gute Geräuschdämpfung und Lagerung der zu halternden rohrförmigen Teile besitzt.

Diese Aufgabe wird erfindungsgemäß dadurch gelöst, daß die Außenschale zur Einlagerung der Innenschale in parallel zur Längsachse des aüfzünehmenden rohrförmigen Teils verlaufender Richtung U-förmig ausgebildet ist und daß die Innen- und Außenschale über Rastelemente miteinander verbunden sind.

Hierdurch ergibt sich der Vorteil, daß einmal eine einfache Montage insofern erfolgt, als die rohrförmigen Teile in den offenen Bereich eingedrückt werden können, wobei nach Durchführung der Montage die überragenden Bereiche der Innenschale die rohrförmigen Teile insgesamt sicher umschließen und einen zusätzlichen Abstand zwischen der Außenschale und dem Träger herstellen, so daß eine sehr gute Geräuschdämpfung gewährleistet ist. Dadurch, daß das weiche Material der Innenschale an den Träger gepreßt wird, verschließen sich die Öffnungen zu den Lagerstellen für die rohrförmigen Teile, wobei durch das Zusammenpressen diese rohrförmigen Teile gedämpft gelagert sind. Da die Außenschale die Innenschale U-förmig umschließt, ist die gesamte Einheit robust aufgebaut und geschützt vor unerwünschten mechanischen Einwirkungen.

In weiterer Ausgestaltung der Erfindung kann die Innenschale durchgehende und/oder durch Zwischenwände unterteilte Freiarbeitungen im Bereich mindestens einer der Lagerstellen besitzen wodurch sich insgesamt ein elastisches Verhalten der Innenschale ergibt, was zur Verbesserung der Geräuschdämpfung beiträgt.

Sind mehrere rohrförmige Teile zu lagern, so kann die Innenschale beidseitig eines mittleren Bereichs die Rastelemente und eine zylindrische Aussparung aufweisen.

In weiterer Ausgestaltung der Erfindung können die Wände der U-förmig ausgebildeten Außenschale mit

2

auf die Lagerstellen der Innenschale abgestellten Ausnehmungen mit Einlaufschräge versehen sein. Auch hierdurch wird die Montage der rohrförmigen Teile erleichtert.

Um die gesamte Einheit sicher an einem Träger zu befestigen, kann in weiterer Ausgestaltung der Erfindung der mittlere Bereich der Außenschale ein mit dem Träger zu verbindendes Befestigungselement aufweisen. Dieses Befestigungselement kann als über eine Schwimmhaut mit dem Boden der Außenschale verbundener, im unmontierten Zustand über den Boden der Außenschale herausragender Bolzen mit Sackloch ausgebildet sein. Der Innenumfang des Sacklochs kann glatt verlaufen oder mit Rippen ausgebildet sein. Weiterhin kann der Bolzen einen im montierten Zustand in einer Ausnehmung am Boden der Außenschale eingelagerten Kopf aufweisen. Damit ist es möglich, durch Aufschlagen auf den Bolzen die aus Innenschale und Außenschale bestehende Einheit schnell, einfach und sicher an einem mit entsprechendem Profil versehenen Teil des Trägers zu befestigen. Da der Bolzen über eine Schwimmhaut an dem Boden der Außenschale befestigt ist, ist Verliersicherheit gewährleistet.

Die Erfindung wird nachfolgend anhand eines in der Zeichnung dargestellten Ausführungsbeispiels näher beschrieben. In der Zeichnung zeigen:

Fig. 1 eine Seitenansicht des aus Kunststoff bestehenden Halteelements nach Befestigung an einem Träger;

Fig. 2 einen Schnitt gemäß der Linie II-II in Fig. 1;

Fig. 3 die Innenschale aus weicherem Material in Seitenansicht;

Fig. 4 einen Schnitt nach der Linie IV-IV in Fig. 3;

Fig. 5 die Außenschale aus härterem Material in Seitenansicht mit angespritztem Bolzen;

Fig. 6 einen Schnitt nach der Linie VI-VI in Fig. 5.

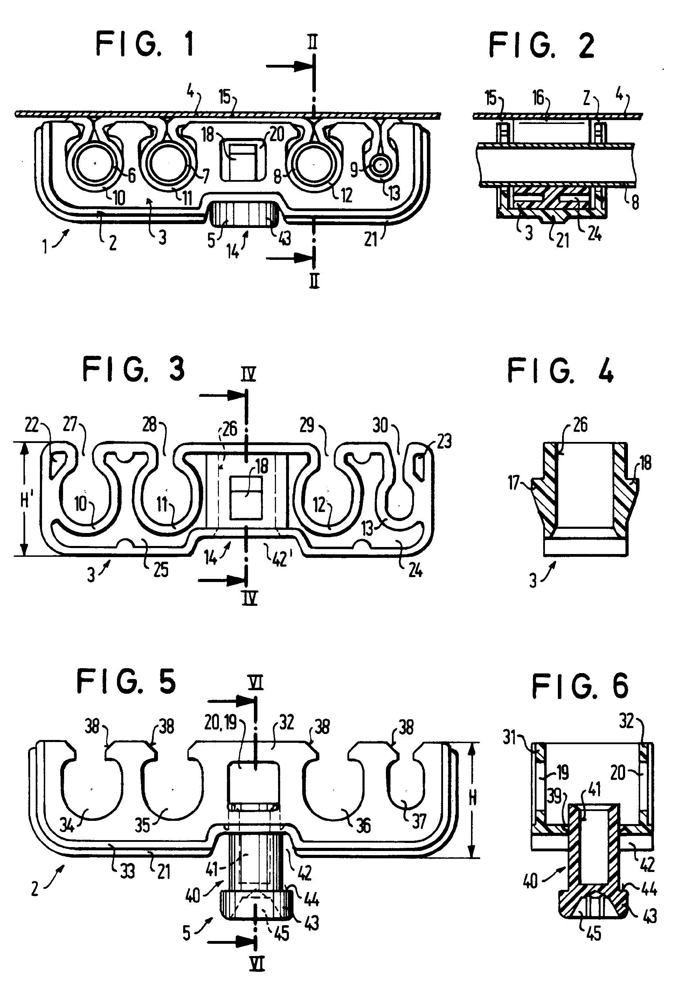

Gemäß Fig. 1 ist ein aus Kunststoff bestehendes Halteelement 1 an einem Träger 4 befestigt. Dieses Halteelement 1 besteht aus einer Außenschale 2 aus härterem Material und einer darin eingesetzten Innenschale 3 aus weicherem Material. Diese Innenschale 3 ist mit mehreren Lagerstellen 10, 11, 12 und 13 zur Aufnahme von rohrförmigen Teilen 6, 7, 8 und 9 versehen. Im mittleren Bereich 14 ist die aus Außenschale 2 und Innenschale 3 bestehende Einheit über ein Befestigungsmittel 5 an dem Träger 4 befestigt.

Wie aus Fig. 1 und 2 ersichtlich, weist die Außenschale 2 einen gegenüber dem Träger 4 offenen Bereich 15 auf, in welchen die die Außenschale 2 im unmontierten Zustand überragende Innenschale 3 eingelagert ist. Wie aus Fig. 1 und 2 ersichtlich, ist die aus weicherem Material bestehende Innenschale 3 so nach der Montage gegen den Träger 4 gepreßt, daß die rohrförmigen Teile 6, 7, 8 und 9 weitestgehend umschlossen sind, wobei sich außerdem zwischen dem oberen Bereich der Außenschale 2 und der gegenüberliegenden Fläche des Trägers 4 ein Zwischenraum Z ergibt. Damit liegt die aus härterem Material bestehende Außenschale 2 nicht an dem Träger 4 an, so daß durch das Zusammenwirken der vorgenannten Elemente eine sehr gute Geräuschdämpfung für die Rohrleitungen 6, 7, 8 und 9 gegeben ist.

In Fig. 3 und 4 ist die aus weicherem Material bestehende Innenschale 3 näher dargestellt. Wie ersichtlich, weist die Innenschale 3 beidseitig des mittleren Bereichs 14 jeweils zwei Lagerstellen 10 und 11 bzw. 12 und 13 auf, welche langlochartig ausgebildet sind mit verengten Einschubbereichen 27, 28, 29 und 30. Weiterhin sind im Bereich der Lagerstellen 10 bis 13 Freiarbeitungen 22 und 23 bzw. 24 und 25 vorgesehen. Hierbei können die Freiarbeitungen 22 und 23 durchgehend sein, während die Freiarbeitungen 24 und 25 mit einem nicht näher dargestellten mittleren Steg ausgestattet sein können.

Im mittleren Bereich 14 weist die aus weicherem Material bestehende Innenschale 3 eine zylindrische Ausnehmung 26 sowie einander gegenüberliegende Rastelemente 17 und 18 auf.

In Fig. 5 und 6 ist die aus hartem Material bestehende Außenschale 2 näher dargestellt. Wie ersichtlich, weist diese Außenschale 2 U-Form auf mit einem Boden 33 und einander gegenüberliegenden Seitenwänden 31 und 32. Im mittleren Bereich sind in den Seitenwänden 31 und 32 gemäß Fig. 6 Ausnehmungen 19 und 20 vorgesehen, welche so bemessen sind, daß sie mit den Rastelementen 17 und 18 der Innenschale 3 zusammenwirken. Darüberhinaus ist im mittleren Bereich als Befestigungselement 5 ein Bolzen 40 vorgesehen mit einem Kopf 43 und einer umlaufenden Fläche 44. Der Kopf 43 ist mit einer Aussparung 45 zur Aufnahme eines Werkzeuges versehen. Damit ist die Montage bzw. Demontage durch Eingriff eines Werkzeuges möglich. Alternativ kann, wie nachfolgend noch näher beschrieben, zur Montage auch der Bolzen 40 auf eine nicht näher dargestellten profilierten Zapfen aufgeschlagen werden. Dieses Befestigungselement 5, d.h. der Bolzen 40 weist im inneren eine Sacklochbohrung 41 auf und ist über eine Schwimmhaut 39 mit dem Boden 33 der Außenschale 3 verbunden.

Aus Fig. 5 und 6 ist weiterhin ersichtlich, daß der Boden 33 im mittleren Bereich eine Ausnehmung 42 analog einer Ausnehmung 42′ im mittleren Bereich der Innenschale 3 (nach Fig. 3) aufweist, welche zur Aufnahme des Kopfes 43 im montierten Zustand gemäß Fig. 1 entsprechend dimensioniert ist. Aus Fig. 2 und 5 geht weiterhin hervor, daß der Boden 33 mit einer sich über den gesamten Bereich erstreckenden Versteifungsrippe 21 zum Schutz gegen Steinschlag versehen ist.

Die Seitenwände 31 und 32 sind analog den Lagerbereichen 10, 11, 12 und 13 der Innenschale 3 mit Ausnehmungen 34, 35, 36 und 37 versehen, welche im oberen Bereich jeweils Einlaufschrägen 38 zur Erleichterung der Montage der rohrförmigen Teile 6, 7, 8 und 9 aufweisen. Diese Schrägen 38 bilden unterseitig Nocken, welche die Aufgabe haben, vormontierte Leitungen zu haltern und in transportfähigem Zustand zu halten.

Die weiche Innenschale 3 wird in den Innenraum der U-förmig ausgebildeten Außenschale 2 eingesetzt, wobei nach Durchführung dieser Montage die Rastelemente 17 und 18 der Innenschale in die Ausnehmungen 19 und 20 der Außenschale einrasten. Hierbei lagert sich der obere Bereich des Bolzens 40 der Außenschale 2 teilweise in den zylindrischen Raum 26 der Innenschale 3.

Zur Durchführung der Montage bezüglich der Rohrleitungen 6, 7, 8 und 9 werden diese in die entsprechenden Lagerstellen 10, 11, 12 und 13 der aus weicherem Material bestehenden Innenschale 3 eingesetzt. Hierbei wird das Einführen der entsprechenden rohrförmigen Teile durch die konisch gestalteten Einschubbereiche 27, 28, 29 und 30 der weichen Innenschale sowie durch die Einlaufschrägen 38 der harten Außenschale erleichtert. Nach Durchführung dieses Montagevorganges wird die so vormontierte Einheit gegen einen entsprechend, nicht näher dargestellten, mit Profilen versehenen Zapfen gedrückt, welcher am Träger 4 befestigt ist. Nunmehr wird der Bolzen 40 durch Schlag auf den Bolzenkopf 43 auf diesen Profilzapfen aufgeschlagen, wobei sich der Profilzapfen in dem Sackloch 41 des Bolzens 40 einlagert und der Bolzen 40 die in Fig. 1 dargestellte Lage einnimmt. In dieser Lage ist die Montage beendet; da die Höhe H der Außenschale 2 geringer ist als die Höhe H′ der Innenschale 3, ergibt sich der in Fig. 1 und 2 dargestellte Abstand Z, so daß nach Durchführung der Montage die einzelnen rohrförmigen Teile 6, 7, 8 und 9 auf einfache Weise aber sehr gut geräuschgedämpft gelagert sind. Es ergibt sich damit eine gedämpfte Lagerung von Leitungen, wie sie insbesondere im Kraftfahrzeugbau von großem Vorteil ist.

**Patentansprüche**

1. Aus Kunststoff bestehendes Halteelement, mit einer an einem Träger zu befestigenden Außenschale (2) aus härterem Material und einer darin eingesetzten Innenschale (3) aus weicherem Material, welche mit zum Träger hin offenen Lagerstellen (10 - 13) zur Aufnahme rohrförmiger Teile versehen ist, wobei die Außenschale (2) einen dem Träger (4) benachbarten offenen Bereich (15) aufweist in welchen die die Außenschale (2) im unmontierten Zustand überragende Innenschale (3) eingelagert ist, dadurch gekennzeichnet, daß die Außenschale (2) zur Einlagerung der Innenschale im schnitt parallel zur Längsachse des aufzunehmenden, rohrförmigen Teils verlaufender Richtung (3) U-förmig ausgebildet ist, und daß die Innen- und Außenschale (2, 3) über Rastelemente miteinander verbunden sind.

2. Halteelement nach Anspruch 1, dadurch gekennzeichnet, daß die Außenschale (2) mit mindestens einer Aussparung (19, 20) versehen ist, in welche ein an der Innenschale (3) angeordnetes Rastelement (17, 18) einlagerbar ist.

3. Halteelement nach Anspruch 2, dadurch gekennzeichnet, daß die Außenschale (2) zwei einander gegenüberliegende Aussparungen (19, 20) und die Innenschale (3) zwei Rastelemente (17, 18) aufweisen.

4. Halteelement nach einem der vorhergehenden Ansprüche, dadurch gekennzeichnet, daß die Innenschale (3) durchgehend und/oder durch Zwischenwände unterteilte Freiarbeitungen (22 - 25) im bereich mindestens einer der Lagerstellen (10 - 13) aufweist.

5. Halteelement nach einem der vorhergehenden Ansprüche, dadurch gekennzeichnet, daß die Innenschale (3) im mittleren bereich (14) die Rastelemente (17, 18) und eine zylindrische Aussparung (26) aufweist.

6. Halteelement nach Anspruch 1, dadurch gekennzeichnet, daß die Wände (31, 32) der U-förmig ausgebildeten Außenschale (2) mit auf die Lagerstellen (10 - 13) der Innenschale (3) abgestellten Ausnehmungen (34 - 37) mit Einlaufschrägen (38) versehen sind.

7. Halteelement nach Anspruch 6, dadurch gekennzeichnet, daß der mittlere bereich (14) der Außenschale (2) ein mit dem Träger (4) zu verbindendes befestigungselement (5) aufweist.

8. Halteelement nach Anspruch 7, dadurch gekennzeichnet, daß das befestigungselement (5) als über eine Schwimmhaut (39) mit dem boden (33) der Außenschale (3) verbundener, im unmontierten Zustand über den boden (33) der Außenschale (2) herausragender bolzen (40) mit Sackloch (41) ausgebildet ist.

9. Halteelement nach Anspruch 8, dadurch gekennzeichnet, daß der Innenumfang des Sacklochs (41) glatt oder mit Rippen ausgebildet ist.

10. Halteelement nach Anspruch 8 und 9, dadurch gekennzeichnet, daß der bolzen (40) einen im montierten Zustand in eine Ausnehmung (42) am boden (33) der Außenschale (2) eingelagerten Kopf (43) aufweist.

**Claims**

1. Retaining element consisting of plastics, having an outer shell (2) of harder material which is to be attached to a support and having an inner shell (3) of softer material which is inserted in said outer shell and is provided with bearing points (10-13), which are open towards the support, for receiving tubular parts, the outer shell (2) having an open region (15) adjacent to the support (4), in which region the inner shell (3) is deposited, said inner shell projecting over the outer shell (2) in the disassembled state, characterised in that the outer shell (2) for depositing the inner shell (3) is of U-shaped construction in section in the direction running parallel to the longitudinal axis of the tubular part to be received, and in that the inner and outer shells (2, 3) are connected to each other via catch elements.

2. Retaining element according to Claim 1, characterised in that the outer shell (2) is provided with at least one cutout (19, 20), in which a catch element (17, 18), arranged on the inner shell (3), can be deposited.

3. Retaining element according to Claim 2, characterised in that the outer shell (2) has two mutually opposite cutouts (19, 20) and the inner shell (3) has two catch elements (17, 18).

4. Retaining element according to one of the preceding claims, characterised in that the inner shell (3) has free spaces (22-25), which are continuous and/or subdivided by partitions, in the region of at least one of the bearing points (10-13).

5. Retaining element according to one of the preceding claims, characterised in that the inner shell (3) has the catch elements (17, 18) and a cylindrical cutout (26) in the central region (14).

6. Retaining element according to Claim 1, characterised in that the walls (31, 32) of the outer shell (2) of U-shaped construction are provided with recesses (34-37) with inlet slopes (38) placed on the bearing points (10-13) of the inner shell (3).

7. Retaining element according to Claim 6, characterised in that the central region (14) of the outer shell (2) has an attachment element (5) which is to be connected to the support (4).

8. Retaining element according to Claim 7, characterised in that the attachment element (5) is constructed as a bolt (40), with a blind hole (41), which is connected to the bottom (33) of the outer shell (3) via a flash (39) and projects over the bottom (33) of the outer shell (2) in the disassembled state.

9. Retaining element according to Claim 8, characterised in that the inside circumference of the blind hole (41) is smooth or is constructed with ribs.

10. Retaining element according to Claims 8 and 9, characterised in that the bolt (40) has a head (43) which is deposited, in the assembled state, in a recess (42) on the bottom (33) of the outer shell (2).

**Revendications**

1. Elément de retenue constitué en matière synthétique, comprenant une coquille extérieure (2) en un matériau plus dur destinée à être fixée à un support et une coquille intérieure (3) en un matériau plus mou introduite à l'intérieur et munie d'alvéoles (10 - 13) ouvertes en direction du support pour y recevoir des éléments de forme tubulaire, la coquille extérieure (2) comportant une zone ouverte (15), voisine du support (4), dans laquelle est introduite la coquille intérieure (3) qui dépasse en hauteur la coquille extérieure (2) à l'état non monté, caractérisé en ce que la coquille extérieure (2) est constituée en forme de U pour l'introduction de la coquille intérieure (3), parallèlement en coupe à l'axe longitudinal de l'élément de forme tubulaire à recevoir, et en ce que les coquilles intérieure et extérieure (2, 3) sont reliées l'une à l'autre par des éléments de blocage.

2. Elément de retenue selon la revendication 1, caractérisé en ce que la coquille extérieure (2) est munie d'au moins un évidement (19, 20) dans lequel peut être introduit un élément de blocage (17, 18) prévu sur la coquille intérieure (3).

3. Elément de retenue selon la revendication 2, caractérisé en ce que la coquille extérieure (2) comprend deux évidements (19, 20) opposés l'un à l'autre et la coquille intérieure (3) deux éléments de blocage (17, 18).

4. Elément de retenue selon l'une quelconque des revendications précédentes, caractérisé en ce que la coquille intérieure (3) comprend dans la région d'au moins l'une des alvéoles (10 - 13) des cavités internes (22 - 25) séparées par des parois intermédiaires.

5. Elément de retenue selon l'une quelconque des revendications précédentes, caractérisé en ce que la coquille intérieure (3) comprend des éléments de blocage (17, 18) et un évidement cylindrique (26) dans sa région centrale (14).

6. Elément de retenue selon la revendication 1, caractérisé en ce que les parois (31, 32) de la coquille extérieure (2) en forme de U sont munies d'évidements (34 - 37) à biseau d'introduction (38) disposés sur les alvéoles (10 - 13) de la coquille intérieure (3).

7. Elément de retenue selon la revendication 6, caractérisé en ce que la région centrale (14) de la coquille extérieure (2) comprend un élément de fixation (5) destiné à être relié au support (4).

8. Elément de retenue selon la revendication 7, caractérisé en ce que l'élément de fixation (5) est constitué sous forme d'un tourillon (40) à trou borgne (41), qui fait saillie à l'état non monté au-delà du fond (33) de la coquille extérieure (2) et qui est relié par l'intermédiaire d'une nervure (39) au fond (33) de la coquille extérieure (3).

9. Elément de retenue selon la revendication 8, caractérisé en ce que la périphérie intérieure du trou borgne (41) est lisse ou nervurée.

10. Elément de retenue selon les revendications 8 et 9, caractérisé en ce que le tourillon (40) comprend une tête (43) qui se dispose à l'état monté dans un évidement (42) du fond (33) de la coquille extérieure (2).

FIG. 1

FIG. 2

FIG. 3

FIG. 4

FIG. 5

FIG. 6